# EUROPÄISCHE PATENTSCHRIFT

(11) **EP 2 174 824 B1**
(45) Veröffentlichungstag und Bekanntmachung des Hinweises auf die Patenterteilung: **21.03.2012**
(21) Anmeldenummer: 09012692.1
(22) Anmeldetag: 07.10.2009
(51) Int. Cl.: B60K 31/04, F02D 11/02, F02D 11/10, B62K 23/04

(54) **Einrichtung zur nicht-linearen Übertragung einer Stellung eines Gasdrehgriffs bei Zweirädern und Geschwindigkeitsbegrenzungseinrichtung für Fahrzeuge, insbesondere Mofas**
Device for non-linear transfer of a setting of a throttle for bicycles and speed restriction device for vehicles, in particular mopeds
Dispositif de transmission non-linéaire d'une position d'une poignée tournante de gaz dans des deux roues et dispositif de limitation de vitesse pour véhicules, notamment des motocyclettes

(30) Priorität: 08.10.2008 DE 202008013233 U
(43) Veröffentlichungstag der Anmeldung: 14.04.2010
(73) Patentinhaber: Niemerg, Stefan, 48336 Sassenberg (DE)
(72) Erfinder: Niemerg, Stefan, 48336 Sassenberg (DE)
(74) Vertreter: Gesthuysen, von Rohr & Eggert

(56) Entgegenhaltungen:
- EP-A1- 0 378 737
- EP-A1- 1 950 077
- EP-A2- 0 301 410
- DE-A1- 2 839 467
- GB-A- 2 068 456
- JP-A- 2004 156 546
- US-A- 4 367 805
- US-A- 4 473 049
- US-A- 4 524 740
- US-A- 4 714 864
- US-B1- 7 315 779

## Beschreibung

Die vorliegende Erfindung betrifft eine Geschwindigkeits-Begtenzungseinrichtung für Fahrzeuge, insbesondere Mofas, die mit einem Gasdrehgriff und einer mit diesem über einen Bowdenzug verbundenen Vorrichtung zum Mischen von Brennstoff und Luft ausgestattet sind, aufweisend ein in den Bowdenzug eingebautes, erstes Federelement als Teil einer Regeleinheit, welches durch eine axial bewegliche Bowdenzug-Seele betätigbar ist, wenigstens einen an wenigstens einem Rad des Fahrzeuges angeordneten Geschwindigkeitssensor, dessen Ausgangssignale der Regeleinheit zugeleitet werden, und ein an der Vorrichtung zum Mischen von Brennstoff und Luft angeordnetes, zweites Federelement, dessen Federkraft kleiner als die des ersten Federelementes ist.

Aus der US 4,714,864 A, die den Oberbegriff des Anspruchs 1 bildet, ist eine Vorrichtung für eine Schlupfsteuerung für Fahrzeuge bekannt, die mit einem Gaspedal und einer mit diesem über einen Bowdenzug verbundenen Einrichtung zum Mischen von Brennstoff und Luft ausgestattet ist. Die bekannte Vorrichtung weist ein in den Bowdenzug eingebautes, erstes Federelement als Teil einer Regeleinheit auf, welches durch eine axiale bewegliche Bowdenzug-Seele betätigbar ist. Darüber hinaus ist am Rad eines Fahrzeuges ein Geschwindigkeitssensor vorgesehen, dessen Ausgangssignale der Regeleinheit zugeleitet werden können. An der Einrichtung zum Mischen von Brennstoff und Luft ist ein zweites Federelement angeordnet, dessen Federkraft kleiner als die des ersten Federelementes ist.

Der Erfindung liegt die Aufgabe zugrunde, Fahrzeuge, insbesondere Mofas, mit einfachen Mitteln auf eine niedrige Geschwindigkeit zu drosseln, die wieder entfernbar sind, wenn der Fahrer das 16. Lebensjahr überschritten hat und Mofas mit höherer Maximalgeschwindigkeit fuhren darf.

Diese Aufgabe wird durch eine Geschwindigkeits-Begrenzungseinrichtung der eingangs genannten Art dadurch gelöst, daß das erste Federelement einen Endes über ein längsaxial bewegliches, plattenförmiges Führungselement mit dem Bowdenzug verbunden ist, welches Führungselement in einen im wesentlichen zylindrischen, ortsfest an dem jeweiligen Fahrzeug angeordneten Korpus eingebaut ist, und daß die Ausgangssignale des Geschwindigkeitssensors über eine Leitung in die Regeleinheit gelangen und die Lage des plattenförmigen Führungselementes und des Federelementes über wenigstens ein am Korpus angeordnetes, motorangetriebenes Stellglied beeinflussen.

Die vorgenannte Begrenzungseinrichtung schafft die Möglichkeit, mit einer einfachen zusätzlich einzubauenden Einrichtung eine entsprechende Drosselung vorzunehrnen, und ermöglicht es gleichzeitig, diese Einrichtung wieder auszubauen oder zu umgehen wenn eine entsprechend höhere Geschwindigkeit ermöglicht werden soll.

Weitere Eigenschaften und Vorteile gehen aus der Beschreibung anhand der Zeichnung hervor.

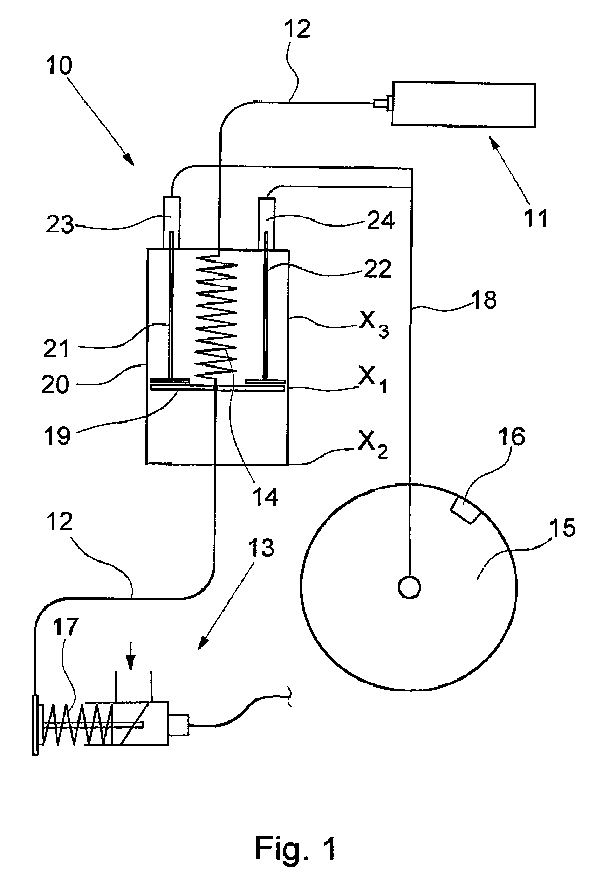

In Figur 1 ist eine Geschwindigkeits-Begrenzungseinrichtung 10 für Fahrzeuge, insbesondere Mofas, dargestellt, die mit einem Gasdrehgriff 11 und einer mit diesem über einen Bowdenzug 12 verbundenen Vorrichtung 13 zum Mischen von Brennstoff und Luft ausgestattet ist. In den Bowdenzug 12 ist ein erstes Federelement 14 als Teil einer Regeleinheit eingebaut, welches durch eine axialbewegliche Bowdenzug-Seele betätigbar ist. Darüber hinaus ist wenigstens ein an wenigstens einem Rad 15 des Fahrzeuges angeordneter Geschwindigkeitssensor 16 vorgesehen, dessen Ausgangssignale der Regeleinheit zugeleitet werden. Im übrigen ist ein an der Vorrichtung 13 zum Mischen von Brennstoff und Luft angeordnetes, zweites Federelement 17 vorgesehen, dessen Federkraft kleiner ist als die des ersten Federelementes 14.

Die Ausgangssignale des Greschwindigkeitssensors 15 gelangen über eine Leitung 18 in die Regeleinheit. Dies kann vorzugsweise kabellos erfolgen.

Die Vorrichtung 13 zum Mischen von Brennstoff und Luft kann ein Vergaser oder ein Teil einer Einspritzvorrichtung sein.

Ein Ende des ersten Federelements 14 ist, über ein längsaxial bewegliches, plattenförmiges Führungselement 19 mit dem Bowdenzug 12 verbunden, welches Führungselement 19 in einen im wesentlichen zylindrischen, ortsfest an dem jeweiligen Fahrzeug angeordneten Korpus 20 eingebaut ist.

Zur Geschwindigkeitsbegrenzung ist nunmehr vorgesehen, daß die Ausgangssignale des Geschwindigkeitssensors 16 die Lage des plattenförmigen Führungselementes 19 und des Federelementes 14 über wenigstens ein am Korpus 20 angeordnetes, motorangetriebenes Stellglied 21, 22 beeinflussen. Bei dem Stellglied 21, 22 handelt es sich jeweils um eine mit einem Schrittmotor 23, 24 verbundene Spindel.

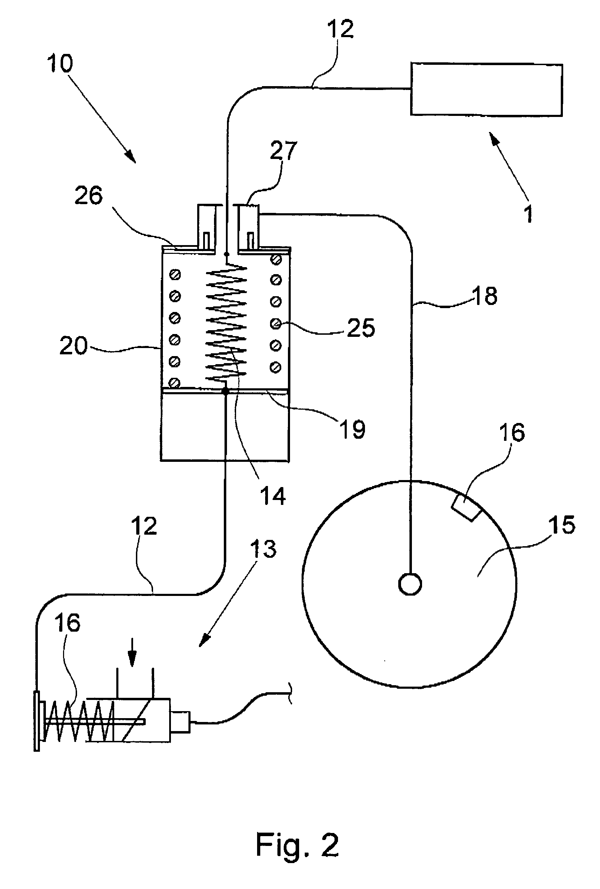

Bei der in Fig. 2 dargestellten alternativen Ausführungsform ist als Stellglied 25 eine Schraubenfeder vorgesehen, die koaxial mit dem ersten Federelement 14 innerhalb des Korpus 20 angeordnet ist. Auf das Stellglied 25 wirkt eine Platte 26, die über einen Stellmotor 27 in der Höhe verstellt werden kann.

Im Ergebnis ist es bei beiden in den Fig. 1 und 2 dargestellten Ausführungsformen so, daß die Ausgangssignale des Geschwindigkeitssensors 16 die Lage des plattenförmigen Führungselementes 19 und des Federelementes 14 über ein am Korpus 20 angeordnetes, motorangetriebenes Stellglied 21, 22, 25 beeinflussen. Durch die jeweilige Stellhöhe (schematisch dargestellt durch die Positionen X₁, X₂, X₃) des Führungselementes 19 im Korpus 20 wird das Federelement 16 entgegen der Federkraft mehr oder weniger weit gelängt, was zu einer entsprechenden Geschwindigkeitssteigerung bzw. Absenkung führt.

## Patentansprüche

1. Geschwindigkeits-Begrenzungseinrichtung (10) für Fahrzeuge, insbesondere Mofas, die mit einem Gasdrehgriff (11) und einer mit diesem über einen Bowdenzug (12) verbundenen Vorrichtung (13) zum Mischen von Brennstoff und Luft ausgestattet sind, aufweisend:
- ein in den Bowdenzug (12) eingebautes, erstes Federelement (14) als Teil einer Regeleinheit, welches durch eine axial bewegliche Bowdenzug-Seele betätigbar ist,
- wenigstens einen an wenigstens einem Rad (15) des Fahrzeuges angeordneten Geschwindigkeitssensor (16), dessen Ausgangssignale der Regeleinheit zugeleitet werden,
- und ein an der Vorrichtung (13) zum Mischen von Brennstoff und Luft angeordnetes, zweites Federelement (17), dessen Federkraft kleiner als die des ersten Federelementes (14) ist, **dadurch gekennzeichnet, daß** ein Ende des ersten Federelements (14) über ein längsaxial bewegliches, plattenförmiges Führungselement (19) mit dem Bowdenzug (12) verbunden ist, welches Führungselement (19) in einen im wesentlichen zylindrischen, ortsfest an dem jeweiligen Fahrzeug angeordneten Korpus (20) eingebaut ist, und daß die Ausgangssignale des Geschwindigkeitssensors (16) über eine Leitung (18) in die Regeleinheit gelangen und die Lage des plattenförmigen Führungselementes (19) und des Federelementes (14) über wenigstens ein am Korpus (20) angeordnetes, motorangetriebenes Stellglied (21, 22, 25) beeinflussen.

2. Geschwindigkeits-Begrenzungseinrichtung nach Anspruch 1, **dadurch gekennzeichnet, daß** die Ausgangssignale des Geschwindigkeitssensors (16) kabellos in die Regeleinheit gelangen.

3. Geschwindigkeits-Begrenzungseinrichtung nach Anspruch 1 oder 2, **dadurch gekennzeichnet, daß** das Stellglied (21, 22) eine mit einem Schrittmotor (23, 24) verbundene Spindel ist.

4. Geschwindigkeits-Begrenzungseinrichtung nach einem der vorhergehenden Ansprüche, **dadurch gekennzeichnet, daß** das Stellglied (25) eine Schraubenfeder ist, die koaxial mit dem ersten Federelement (14) innerhalb des Korpus (20) angeordnet ist.

## Claims

1. A speed limiter (10) for vehicles, in particular for mopeds, which are equipped with a throttle twist grip (11) and a fuel/air mixing device (13) connected with the latter by means of a Bowden cable (12), exhibiting:
- a first spring element (14) built into the Bowden cable (12) as part of a control unit, which can be activated via an axially movable Bowden cable core,
- at least one speed sensor (16) arranged on at least one wheel (15) of the vehicle, the output signals of which are supplied to the control unit,
- and a second spring element (17) arranged on the fuel/air mixing device (13), the elasticity of which is less than that of the first spring element (14), **characterized in that** one end of the first spring element (14) is connected by means of a longitudinally and axially movable, plate-shaped guiding element (19) with the Bowden cable (12), the guiding element (19) of which is built into an essentially cylindrical body (20) immovably fixed to the respective vehicle, and that the output signals of the speed sensor (16) get into the control unit by way of a line (18), and influence the position of the plate-shaped guiding element (19) and spring element (14) via at least one motor-driven actuator (21, 22, 25) arranged on the body (20).

2. The speed limiter according to claim 1, **characterized in that** the output signals of the speed sensor (16) get into the control unit wirelessly.

3. The speed limiter according to claim 1 or 2, **characterized in that** the actuator (21, 22) is a spindle connected with a stepping motor (23, 24).

4. The speed limiter according to one of the preceding claims, **characterized in that** the actuator (25) is a helical spring arranged coaxially with the first spring element (14) inside the body (20).

## Revendications

1. Dispositif de limitation de vitesse (10) pour véhicules, notamment des motocyclettes, dotés d'une poignée tournante de gaz (11) et d'un dispositif (13) relié à celle-ci par un câble de Bowden (12) pour mélanger du carburant et de l'air, présentant :
- un premier élément de ressort (14) monté dans le câble de Bowden (12), faisant partie d'une unité de régulation, qui peut être actionné par une âme de câble de Bowden mobile axialement,
- au moins un capteur de vitesse (16) disposé sur au moins une roue (15) du véhicule, dont les signaux de sortie sont transmis à l'unité de régulation,
- et un deuxième élément de ressort (17) disposé sur le dispositif (13) pour mélanger du carburant et de l'air, dont la tension de ressort est inférieure à celle du premier élément de ressort (14), **caractérisé en ce qu'**une extrémité du premier élément de ressort (14) est reliée au câble de Bowden (12) au moyen d'un élément de guidage (19) mobile axialement en longueur et en forme de plaque, lequel élément de guidage (19) est monté dans un corps (20) essentiellement cylindrique, disposé fixement sur le véhicule respectif, et **en ce que** les signaux de sortie du capteur de vitesse (16) parviennent à l'unité de régulation par un câble (18) et influencent la position de l'élément de guidage (19) en forme de plaque et de l'élément de ressort (14) par au moins un membre de réglage (21, 22, 25) entraîné par moteur et disposé sur le corps (20).

2. Dispositif de limitation de vitesse selon la revendication 1, **caractérisé en ce que** les signaux de sortie du capteur de vitesse (16) parviennent sans câble à l'unité de régulation.

3. Dispositif de limitation de vitesse selon la revendication 1 ou 2, **caractérisé en ce que** le membre de réglage (21, 22) est une broche reliée à un moteur pas-à-pas (23, 24).

4. Dispositif de limitation de vitesse selon l'une des revendications précédentes, **caractérisé en ce que** le membre de réglage (25) est un ressort hélicoïdal disposé coaxialement avec le premier élément de ressort (14) à l'intérieur du corps (20).
